# EUROPÄISCHE PATENTSCHRIFT

(11) **EP 3 046 797 B1**
(45) Veröffentlichungstag und Bekanntmachung des Hinweises auf die Patenterteilung: **15.07.2020**
(21) Anmeldenummer: 14755365.5
(22) Anmeldetag: 22.08.2014
(51) Int. Cl.: B60K 37/06, H04L 29/08

(54) **BEDIENSYSTEM UND BEDIENVERFAHREN FÜR EIN FAHRZEUG**
OPERATOR CONTROL SYSTEM AND OPERATOR CONTROL METHOD FOR A VEHICLE
SYSTÈME DE COMMANDE ET PROCÉDÉ DE COMMANDE DESTINÉ À UN VÉHICULE

(30) Priorität: 17.09.2013 DE 102013218593
(43) Veröffentlichungstag der Anmeldung: 27.07.2016
(73) Patentinhaber: Volkswagen Aktiengesellschaft, 38440 Wolfsburg (DE)
(72) Erfinder: CZELNIK, Mark Peter, 38444 Wolfsburg (DE); SEITZ, Gordon, 38468 Ehra-Lessien (DE); KÖTTER, Nils, 38118 Braunschweig (DE)
(86) Internationale Anmeldenummer: PCT/EP2014/067898
(87) Internationale Veröffentlichungsnummer: WO 2015/039834

(56) Entgegenhaltungen:
- WO-A1-2008/043059
- US-A1- 2012 242 474

## Beschreibung

Die vorliegende Erfindung betrifft ein Bediensystem und ein Bedienverfahren für ein Fahrzeug.

Die Bedienung von Fahrzeugfunktionen geschieht in der Regel über fest im Fahrzeug angeordnete Bedieneinrichtungen, die häufig viel Platz im vorderen Bereich des Fahrzeugs einnehmen und in Reichweite des Fahrers angeordnet sind. Beispielsweise werden die Fahrzeugfunktionen über einen Touch-Screen bedient. Ebenfalls bekannt ist die Bedienung von Fahrzeugfunktionen über einen Dreh-Drück-Steller, wobei die Einstellungen auf einem im Fahrzeug angeordneten Display angezeigt werden. Weiterhin kann ein Nutzer sein Mobiltelefon mit dem Fahrzeug verbinden, um auf die auf dem Mobiltelefon gespeicherten Daten, hauptsächlich auf die auf dem Mobiltelefon oder MP3-Player abgespeicherten Musik, zuzugreifen. Häufig werden dabei die Fahrzeugfunktionen um Funktionen erweitert, die von der mobilen Bedieneinrichtung bereitgestellt werden.

Aus der DE 10 2011 101 808 A1 ist ein Verfahren sowie ein System zum Bereitstellen einer Nutzerschnittstelle in einem Fahrzeug bekannt. Über die Nutzerschnittstelle kann ein mobiles Wiedergabegerät mit dem Fahrzeug verbunden werden. Weiterhin werden Anzeigeinhalte auf dem mobilen Wiedergabegerät erzeugt, welche den auf einer fest im Fahrzeug angeordneten Anzeige- und Bedieneinrichtung angezeigten Informationen über erfasste Betriebsparameter entsprechen.

Weiterhin ist aus der DE 10 2006 060 188 A1 ein System zum Ankoppeln unterschiedlicher externer Geräte bekannt. Das System umfasst eine Schnittstelle zum Ankoppeln eines externen Geräts, eine Verstärkereinheit zur Verstärkung von über die Schnittstelle zugeführten Signalen des Geräts und eine Lautsprechereinheit, welche die verstärkten Signale empfängt. Entsprechende Geräte sind beispielsweise Mobiltelefone, Mikrofone, CD-Spieler usw.

Schließlich ist aus der DE 10 2011 008 770 A1 eine Andockstation in einem Fahrzeug zum Anschließen eines Multimediagerätes bekannt. Wird das Multimediagerät angeschlossen, kann eine Basisbedieneinheit von dem Multimediagerät ersetzt werden.

Nachteilig an dem vorliegenden Stand der Technik ist, dass die Erweiterung der Fahrzeugfunktionen durch das Anschließen externer Geräte in der Regel von der Leistungsfähigkeit dieser Geräte abhängt. In der Regel ist lediglich ein Zugriff des Fahrzeugs auf die Daten auf dem externen Gerät, jedoch nicht umgekehrt möglich.

Aus der WO 2008/043059 A1 ist ein Infotainment- bzw. Telematiksystem mit einer Basiseinheit und einer tragbaren Kommunikationseinrichtung bekannt. Dabei umfasst die Basiseinheit mehrere Basiseinrichtungen, welche selbstständig Infotainment- und Telematikfunktionen ausführen können. Wenn die Basiseinheit mit der tragbaren Kombinationseinrichtung gekoppelt ist, kann diese weitere Funktionen nutzen.

Ferner ist aus der US 2012/0242474 A1 eine Bildverarbeitungseinrichtung mit einer Nutzerschnittstelle bekannt.

Der vorliegenden Erfindung liegt die Aufgabe zugrunde, ein Bediensystem und ein Bedienverfahren bereit zu stellen, mit welchen neben der Basisfunktionen zusätzliche Fahrzeugfunktionen bedient werden können, welche vom Fahrzeug selbst bereitgestellt werden. Gleichzeitig soll eine platzsparende, kostengünstige und einfache Bedienung bereitgestellt werden.

Diese Aufgabe wird durch ein Bediensystem nach Anspruch 1 und ein Bedienverfahren nach Anspruch 7 gelöst. Vorteilhafte Ausgestaltungen und Weiterbildungen sind Gegenstände der abhängigen Ansprüche.

Das erfindungsgemäße Bediensystem umfasst eine fest im Fahrzeug angeordneten Bedieneinrichtung, mit der zumindest eine erste Funktion des Fahrzeugs bedienbar ist, eine zu einer Ausführung der ersten Funktion notwendige Vorrichtung, eine Schnittstelle, über welche eine mobile Bedieneinrichtung mit dem Fahrzeug koppelbar ist, wobei mit der mobilen Bedieneinrichtung zumindest eine zweite Funktion des Fahrzeugs bedienbar ist, welche nicht mit der fest im Fahrzeug angeordnete Bedieneinrichtung bedienbar ist und eine zu einer Ausführung der zweiten Funktion notwendige Vorrichtung. Weiterhin umfasst das Bediensystem eine Steuervorrichtung, welche die erste Funktion des Fahrzeugs in Abhängigkeit von Nutzereingaben an der fest im Fahrzeug angeordneten Bedieneinrichtung steuert und welche die zweite Funktion dann bedienbar macht, wenn die mobile Bedieneinrichtung über die Schnittstelle mit dem Fahrzeug gekoppelt ist, wobei die zweite Funktion in Abhängigkeit von Nutzereingaben an der mobilen Bedieneinrichtung steuerbar ist. Weiterhin ist die zu der Ausführung der zweiten Funktion notwendige Vorrichtung nur dann ansteuerbar, wenn die mobile Bedieneinrichtung mit dem Fahrzeug gekoppelt ist.

Durch das erfindungsgemäße Bediensystem kann gewährleistet werden, dass bestimmte Basisfunktionen des Fahrzeugs auf einfache Weise von der fest im Fahrzeug angeordneten Bedieneinrichtung bedient werden können. Zusätzlich sind Sonderfunktionen nur dann bedienbar, wenn der Nutzer eine mobile Bedieneinrichtung mit dem Fahrzeug koppelt. Vorteilhafterweise muss dann für die Bedieneinrichtungen im Fahrzeug nicht viel Bauraum eingeplant werden.

Dies ist vor allem in Kleinwägen, welche nur wenig Platz bieten, von Vorteil. Auch führt dies zu einer Kostenreduktion, da nur wenige Tasten, Knöpfe und/oder Schalter notwendig sind, um eine Basisbedienung bereitzustellen.

Weiterhin ist Hardware für beide Fahrzeugfunktionen im Fahrzeug verbaut. Die Hardware der zweiten Funktion kann allerdings nur dann verwendet werden, wenn die mobile Bedieneinrichtung mit dem Fahrzeug gekoppelt wird. Die zweite Funktion ist insbesondere eine Funktion, die der Nutzer nicht ständig in Betrieb nimmt. Dies kann beispielsweise eine Funktion sein, die hauptsächlich zu einer bestimmten Jahreszeit in Betrieb genommen wird. So kann zwar die Funktion im Fahrzeug verbaut sein, sie nimmt aber in der Basisbedieneinheit keinen unnötigen Platz ein. Vorteilhafterweise ist sie aber durch die mobile Bedieneinrichtung bedienbar.

Bevorzugt umfassen die fest im Fahrzeug angeordnete Bedieneinrichtung und/oder die mobile Bedieneinrichtung eine Anzeigefläche, wobei zumindest die Anzeigefläche der mobilen Bedieneinrichtung berührungsempfindlich ist. Damit wird von der mobilen Bedieneinrichtung vorteilhafterweise eine einfache Anzeigefläche bereitgestellt, die gleichzeitig zur Bedienung der Funktionen verwendet werden kann.

In einer Ausgestaltung des erfindungsgemäßen Bediensystems ist durch das Koppeln der mobilen Bedieneinrichtung über die Schnittstelle mit dem Fahrzeug auf der Anzeigefläche der mobilen Bedieneinrichtung zumindest ein erstes graphisches Element anzeigbar, mittels welchem die zur Ausführung der zweiten Funktion notwendige Vorrichtung ansteuerbar ist, und zumindest ein zweites graphisches Element anzeigbar, mittels welchem die zur Ausführung der ersten Funktion notwendige Vorrichtung ansteuerbar ist. Dadurch lassen sich vorteilhafterweise beide Funktionen auf einfache Art und Weise über die mobile Bedieneinrichtung bedienen. Der Nutzer muss sich nicht merken, mit welcher Bedieneinrichtung welche Funktion bedient wird. Gleichzeitig hat er aber trotzdem die Möglichkeit, die Basisbedienung weiterhin mit der Basisbedieneinheit auszuführen. Die zweite Fahrzeugfunktion kann allerdings nur über die mobile Bedieneinrichtung bedient werden. Vor dem Koppeln der mobilen Bedieneinrichtung mit dem Fahrzeug ist eine Ansteuerung der zur Ausführung der ersten Funktion notwendigen Vorrichtung durch die Steuervorrichtung nicht möglich.

Erfindungsgemäß ist die zweite Funktion eine Unterfunktion der ersten Funktion. Dadurch können vorteilhafterweise Basisfunktionen um weitere Unterfunktionen erweitert werden. Insbesondere sind diese Unterfunktionen Funktionen, die in einem Fahrzeug nicht zwingend notwendig oder nicht sicherheitsrelevant sind.

Ferner ist erfindungsgemäß die erste Funktion eine Klimafunktion, wobei die zur Ausführung der Klimafunktion notwendige Vorrichtung ein Gebläse, welches die Lüftungsstärke steuert, Heizungen für die Luft im Innenraum des Fahrzeugs oder für die dem Innenraum des Fahrzeugs zugeführte Luft, und/oder Scheibenheizungen umfasst, und die zweite Funktion eine Sitzheizungsfunktion, wobei die zur Ausführung der Sitzheizungsfunktion notwendige Vorrichtung eine in den Sitzen integrierte Sitzheizung ist. Die Sitzheizung ist eine Zusatzfunktion, die in der Regel nicht bei der Serienproduktion von Fahrzeugen, sondern lediglich auf gesonderten Wunsch eines Kunden in das Fahrzeug eingesetzt wird. Eine allgemeine Klimafunktion hingegen ist in der Regel in jedem Fahrzeug verbaut. Die Klimafunktion hat über die Komfortfunktion hinaus auch eine sicherheitsrelevante Funktion, um einen zu großen Unterschied zwischen Außen- und Innentemperatur und somit ein Anlaufen der Fahrzeugscheiben, vor allem bei geringen Außentemperaturen, zu vermeiden.

In einer weiteren Ausgestaltung umfasst die zur Ausführung der ersten Funktion notwendige Vorrichtung die zur Ausführung der zweiten Funktion notwendige Vorrichtung. Dann kann nämlich die zur Ausführung der zweiten Funktion notwendige Vorrichtung bereits für die erste Funktion verwendet werden. Sie kann allerdings nur dann derart angesteuert werden, dass die zweite Funktion ausgeführt wird, wenn die mobile Bedieneinrichtung mit dem Fahrzeug gekoppelt ist.

Insbesondere kann eine weitere Funktion auch ein Fahrerassistenzsystem sein. Dieses ist nur dann bedienbar, wenn die mobile Bedieneinrichtung mit dem Fahrzeug gekoppelt ist. Die zur Ausführung des Fahrerassistenzsystems notwendige Vorrichtung richtet sich dann nach der Art des Fahrerassistenzsystems. Dies gewährleistet vorteilhafterweise, dass eine Bedienung von Fahrerassistenzsystemen auch dann möglich ist, wenn keine Bediensysteme für das Fahrerassistenzsystem direkt im Fahrzeug verbaut sind.

In einer weiteren Ausgestaltung ist die Schnittstelle eine drahtgebundene Schnittstelle, welche auf einem schwenkbaren Arm im Innenraum des Fahrzeugs angeordnet ist. Dies hat den Vorteil, dass die mobile Bedieneinrichtung dann ebenfalls auf dem schwenkbaren Arm angeordnet wird und im Innenraum des Fahrzeugs bewegbar gelagert ist.

Die Erfindung betrifft ferner ein Bedienverfahren in einem Fahrzeug, bei dem zumindest eine erste Funktion des Fahrzeugs mittels einer fest im Fahrzeug angeordneten Bedieneinheit bedient wird, wobei eine zu einer Ausführung der ersten Funktion notwendige Vorrichtung im Fahrzeug angeordnet ist. Über eine Schnittstelle wird eine mobile Bedieneinrichtung mit dem Fahrzeug gekoppelt, wobei mit der mobilen Bedieneinrichtung zumindest eine zweite Funktion des Fahrzeugs bedient wird, welche nicht mit der fest im Fahrzeug angeordneten Bedieneinrichtung bedient wird. Dabei ist eine zu einer Ausführung der zweiten Funktion notwendige Vorrichtung im Fahrzeug angeordnet. Die erste Funktion des Fahrzeugs wird in Abhängigkeit von Nutzereingaben an der fest im Fahrzeug angeordneten Bedieneinrichtung gesteuert und die zweite Funktion wird dann bedienbar gemacht, wenn die mobile Bedieneinrichtung über die Schnittstelle mit dem Fahrzeug gekoppelt wird. Dabei wird die zweite Funktion in Abhängigkeit von Nutzereingaben in die mobile Bedieneinrichtung gesteuert. Die zur Ausführung der zweiten Funktion notwendige Vorrichtung wird nur dann so angesteuert, dass die zweite Funktion ausgeführt wird, wenn die mobile Bedieneinrichtung mit dem Fahrzeug gekoppelt ist.

Bei dem erfindungsgemäßen Bedienverfahren ist die zweite Funktion eine Unterfunktion der ersten Funktion und die erste Funktion ist eine Klimafunktion, wobei die zur Ausführung der Klimafunktion notwendige Vorrichtung ein Gebläse, welches die Lüftungsstärke steuert, Heizungen für die Luft im Innenraum des Fahrzeugs oder für die dem Innenraum des Fahrzeugs zugeführte Luft und/oder Scheibenheizungen umfasst, und die zweite Funktion ist eine Sitzheizungsfunktion, wobei die zur Ausführung der Sitzheizungsfunktion notwendige Vorrichtung eine in den Sitzen integrierte Sitzheizung ist.

Das Bedienverfahren wird insbesondere mit einem erfindungsgemäßen Bediensystem ausgeführt und weist daher alle Vorteile des Bediensystems auf.

Im Folgenden wird die Erfindung anhand von Ausführungsbeispielen mit Bezug zu den Zeichnungen erläutert.
- Figur 1: zeigt ein Ausführungsbeispiel eines erfindungsgemäßen Bediensystems,
- Figur 2: zeigt ein erstes Ausführungsbeispiel einer Anordnung des erfindungsgemäßen Bediensystems in einem Fahrzeuginnenraum,
- Figur 3: zeigt ein zweites Ausführungsbeispiel einer Anordnung des erfindungsgemäßen Bediensystems in einem Fahrzeuginnenraum,
- Figur 4: zeigt ein Ausführungsbeispiel der fest im Fahrzeug angeordneten Bedieneinheit,
- Figuren 5a bis 5e: zeigen Ausführungsbeispiele der Anzeigen auf der Anzeigefläche der mobilen Bedieneinrichtung für eine Radiofunktion, und
- Figuren 6a und 6b: zeigen Ausführungsbeispiele der Anzeigen auf der Anzeigefläche der mobilen Bedieneinrichtung für die Klimafunktion.

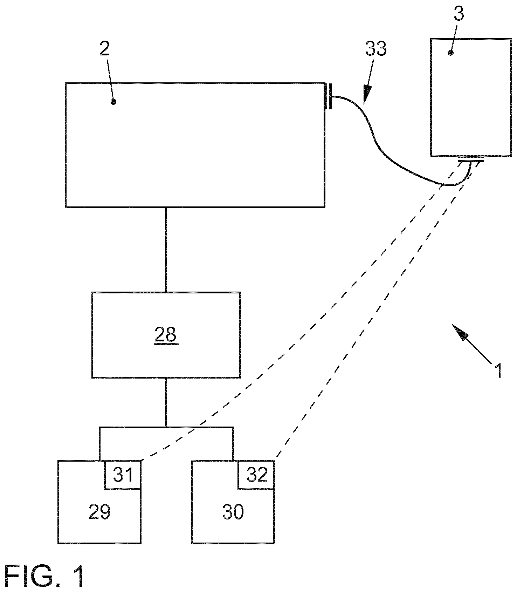

Mit Bezug zu Figur 1 wird ein Ausführungsbeispiel eines erfindungsgemäßen Bediensystems 1 erläutert. Das Bediensystem 1 umfasst eine fest im Fahrzeug angeordnete Bedieneinrichtung 2, eine Schnittstelle 33 und eine mobile Bedieneinrichtung 3. Die Schnittstelle 33 ist dabei als Steckverbindung ausgebildet, über welche die mobile Bedieneinrichtung 3 mit dem Fahrzeug verbunden wird. Die mobile Bedieneinrichtung 3 ist ein handelsübliches Mobiltelefon des Nutzers, welches mit einem berührungsempfindlichen Bildschirm ausgestattet ist.

Weiterhin umfasst das Bediensystem 1 eine Steuervorrichtung 28 und mehrere Vorrichtungen 29 und 30, die zur Ausführung verschiedener Fahrzeugfunktionen notwendig sind. Die Vorrichtung 29 ist dabei ein Fahrzeugradio, welches eine Radiofunktion des Fahrzeugs bereitstellt. Dabei gehören zu der Vorrichtung 29, welche notwendig ist, um die Radiofunktion auszuführen eine Empfangsantenne und eine Lautsprecheranlage. Zumindest die Basisfunktionen der Radiofunktion werden dabei über die fest im Fahrzeug angeordnete Bedieneinrichtung 2 bedient.

Die Vorrichtung 30 ist eine Klimaanlage, welche eine Klimafunktion für das Fahrzeug bereitstellt und welche Gebläse, welche die Lüftungsstärke steuern, Heizungen für die Luft im Innenraum des Fahrzeugs oder für die dem Innenraum des Fahrzeugs zugeführte Luft, und/oder Scheibenheizungen umfasst. Dabei sind wie bei der Radiofunktion die Basisfunktionen der Klimaanlage mit der fest im Fahrzeug angeordneten Bedieneinrichtung 2 bedienbar.

Zu den Basisfunktionen der Radiofunktion gehören eine Lautstärkeverstellung, ein Auslösen einer SCAN-Funktion, ein manueller Sendersuchlauf, ein Speichern von höchstens zehn Favoritensendern, eine Bandumschaltung und eine Verkehrsfunktion.

Zu den Basisfunktionen der Klimafunktion gehören eine Abtaufunktion, eine Heckscheibenheizung, eine Klimaanlage und eine Einstellung der Temperatur, der Ventilationsstärke und der Luftverteilung.

Weiterhin umfasst das Bediensystem 1 Vorrichtungen 31 und 32, welche zu den Vorrichtungen 29 und 30 gehören. Die Vorrichtungen 31 und 32 sind jedoch nur dann ansteuerbar, wenn die mobile Bedieneinrichtung 3 über die Schnittstelle 33 mit dem Fahrzeug gekoppelt ist. Dies ist über die gestrichelten Linien kenntlich gemacht.

Die Vorrichtungen 31 sind insbesondere Basslautsprecher und/oder Lautsprecher zur Wiedergabe von Höhen in der Musik. Diese Lautsprecher sind zwar in dem Fahrzeug verbaut und liefern für die Basiseinstellungen auch eine Grundeinstellung für den Bass oder die Musikhöhen, können jedoch nur aktiv angesteuert werden, wenn die mobile Bedieneinrichtung 3 mit dem Fahrzeug gekoppelt ist. Somit ist auch eine Verstellung der Einstellungen für diese Lautsprecher lediglich über die mobile Bedieneinrichtung 3 möglich.

Weiterhin können die Vorrichtungen 31 auch einen Geschwindigkeitssensor umfassen, welcher Signale für eine geschwindigkeitsabhängige Lautstärkeregelung liefert.

Die Vorrichtung 32 kann eine Sitzheizung sein, welche ein Sitzheizungsfunktion ermöglicht. Weiterhin kann die Vorrichtung 32 auch ein Sensor sein, welcher die Güte der Luft in der Umgebung des Fahrzeugs erfasst, um eine automatische Umluftfunktion bereitzustellen. Auch hier können diese Vorrichtungen 32 nur dann angesteuert werden, wenn die mobile Bedieneinrichtung 3 mit dem Fahrzeug gekoppelt ist.

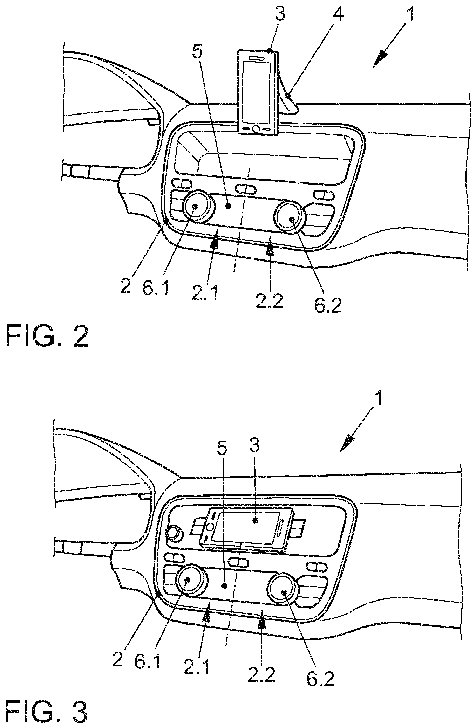

Mit Bezug zu Figur 2 wird ein erstes Ausführungsbeispiel einer Anordnung des erfindungsgemäßen Bediensystems 1 aus Figur 1 erläutert. Die Steckverbindung des Bediensystems 1 ist in einer schwenkbaren Halterung 4 angebracht. Dadurch kann das Mobiltelefon 3 im Innenraum des Fahrzeugs in eine Position geschwenkt werden, die dem Nutzer das Bedienen erleichtert.

Über die fest im Fahrzeug angeordnete Bedieneinrichtung 2 wird ein Basisbedienteil bereitgestellt, mit welchem eine Basisbedienung der Funktionen des Fahrzeugs ermöglicht wird. Das Basisbedienteil umfasst weiterhin eine Anzeigefläche 5, auf der Grundeinstellungen angezeigt sind. Das Basisbedienteil ist in zwei Bereiche 2.1 und 2.2 unterteilt. In dem ersten Bereich 2.1 wird die Radiofunktion des Fahrzeugs und in dem zweiten Bereich 2.2 die Klimafunktion des Fahrzeugs bedient. Zum Bedienen der Radiofunktion ist in dem ersten Bereich 2.1 ein erstes Bedienelement 6.1 angeordnet, welches als Dreh-Drückschalter ausgebildet ist. Zum Bedienen der Klimafunktion ist in dem zweiten Bereich 2.2 eine zweiter Dreh-Drückschalter 6.2 angeordnet.

Mit Bezug zu Figur 3 wird ein zweites Ausführungsbeispiel der Anordnung des Bediensystems 1 im Fahrzeuginnenraum erläutert. Das Bediensystem 1 ist dabei im Allgemeinen gleich zu dem ersten Ausführungsbeispiel aus Figur 1 ausgebildet. Lediglich die mobile Bedieneinrichtung 3 ist dabei nicht auf einer schwenkbaren Halterung 4 angeordnet, sondern ist in einer Ausnehmung des Armaturenbretts auf der als Steckverbindung ausgebildete Schnittstelle aufgenommen. Dadurch kann das Mobiltelefon 3 in den Fahrzeuginnenraum integriert werden und eine fest im Fahrzeug angeordnete Bedieneinheit 2 mit Anzeigefläche 5, welche normalerweise viel Platz benötigt, ersetzen.

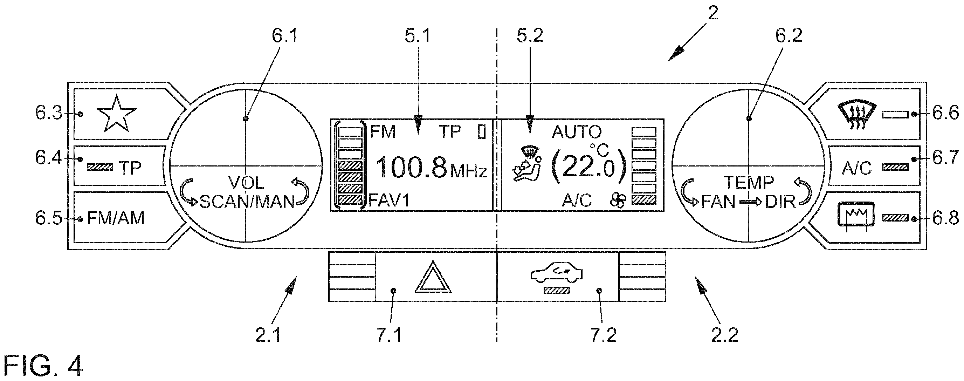

Mit Bezug zu Figur 4 wird eine detaillierte Ausführung des Basisbedienteils 2 aus den Figuren 1 bis 3 beschrieben.

Das Basisbedienteil 2 weist wie bereits beschrieben zwei Bereiche 2.1 und 2.2 auf. Das Basisbedienteil 2 ermöglicht die Bedienung einer Radiofunktion mittels des Bereichs 2.1 sowie die Bedienung einer Klimafunktion mittels des Bereichs 2.2.

In dem ersten Bereich 2.1, mittels welchem Grundeinstellungen für die Radiofunktion getroffen werden können, ist der Dreh-Drückschalter 6.1 angeordnet. Außerdem sind in dem ersten Bereich 2.1 weitere Bedienelemente 6.3 bis 6.5 angeordnet, welche als Drückschalter ausgebildet sind. Mittels des Dreh-Drückschalters 6.1 lässt sich die Lautstärke der Radiofunktion steuern. Mittels des Drückschalters 6.3 kann eine bestimmte Anzahl an Radiosendern, beispielsweise zehn Radiosender, als Favoritensender abgespeichert werden. Weiterhin kann damit der Radiosender zwischen den Favoritensendern gewechselt werden. Mittels des Drückschalters 6.4 kann eine Verkehrsfunktion ein- und ausgeschaltet werden. Mittels des Drückschalters 6.5 kann zwischen einem amplitudenmodulierten (AM) und einem frequenzmodulierten (FM) Modus umgeschaltet werden.

Weiterhin ist in dem ersten Bereich 2.1 ein Drückschalter 7.1 angeordnet, mit dem eine Warnblinkanlage eingeschaltet werden kann.

Mittels der Bedienelemente 6.1 und 6.3 bis 6.5 können lediglich Grundeinstellungen der Radiofunktion eingestellt werden.

In dem zweiten Bereich 2.2, mittels welchem Grundeinstellungen für die Klimafunktion getroffen werden können, ist der Dreh-Drückschalter 6.2 angeordnet. Außerdem sind in dem zweiten Bereich 2.2 weitere Bedienelemente 6.6 bis 6.8 angeordnet, welche ebenso als Drückschalter ausgebildet sind, wie die Bedienelemente 6.3 bis 6.5 im ersten Bereich 2.1. Mittels des Dreh-Drückschalters 6.2 kann die Temperatur, welche der Fahrzeuginnenraum einnehmen soll, durch Drehen des Dreh-Drückschalters 6.2 eingestellt werden. Mittels des Drückschalters 6.6 kann eine Abtaufunktion eingeschaltet werden. Mit dem Drückschalter 6.7 kann eine Klimaanlage eingeschaltet werden und mit dem Drückschalter 6.8 kann die Heckscheibenheizung eingeschaltet werden. Die Funktion des Dreh-Drückschalters 6.2 richtet sich je nach gedrücktem Drückschalter 6.6 bis 6.8. Ist der Drückschalter 6.6 gedrückt, so regelt der Dreh-Drückschalter 6.2 die Stärke der Ventilation für die Abtaufunktion. Ist der Drückschalter 6.7 gedrückt kann mit dem Dreh-Drückschalter 6.2 die einzustellende Temperatur des Fahrzeuginnenraums eingestellt werden. Durch mehrmaliges Drücken des Drückschalters 6.7 können jeweils unterschiedliche Funktionen der Klimaanlage mit dem Drehknopf 6.2 eingestellt werden. Ist der Drückschalter 6.8 gedrückt, kann die Stärke der Heckscheibenheizung eingestellt werden.

Weiterhin ist in dem zweiten Bereich 2.2 ein Drückschalter 7.2 angeordnet, mit dem die Umluft im Fahrzeuginnenraum manuell eingeschaltet werden kann.

Schließt nun der Nutzer sein Mobiltelefon 3 über die Schnittstelle 33 an das Fahrzeug an, so öffnet sich auf der Anzeigefläche ein Menü, mittels welchem er nun sowohl die Radiofunktion als auch die Klimafunktion bedienen kann. Dabei kann die Bedienung der Basisfunktionen nun auch über die mobile Bedieneinrichtung 3 geschehen.

Wählt der Nutzer die Radiofunktion aus, so wird dem Nutzer nicht nur eine verbesserte Darstellung der eingestellten Basisfunktion und eine einfachere und intuitivere Bedienung der Basisfunktion bereitgestellt. Er erhält auch die Möglichkeit zusätzliche Funktionen, für deren Ausführung notwendige Vorrichtungen 31, 32 bereits im Fahrzeug vorhanden sind, zu bedienen.

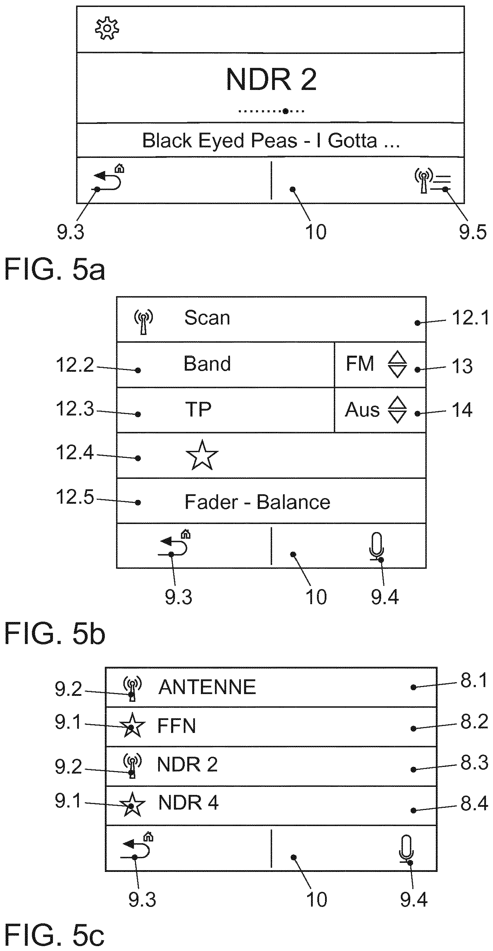

Dem Nutzer wird bei Auswählen der Radiofunktion zunächst die in Figur 5a gezeigte Ansicht auf der Anzeigefläche der mobilen Bedieneinrichtung 3 angezeigt. Dabei wird lediglich der Name des Radiosenders sowie der momentan gespielte Musiktitel angezeigt. Weiterhin befindet sich auf der Anzeige eine Leiste 10. Durch Betätigen des Schaltelements 9.3 kann der Nutzer zu einer Home-Anzeige zurückkehren. Durch Betätigen des Schaltelements 9.5 kann der Nutzer ein Menü öffnen, welches die Einstellungen der Radiofunktion sowie von Zusatzfunktionen ermöglicht.

Dieses Menü ist in Figur 5b gezeigt, wobei die drei Grundeinstellungen, welche am Basisbedienteil 2 mittels der Drückschalter 6.3 bis 6.5 getätigt werden können, nun ebenso auf der Anzeigefläche des Mobiltelefons 3 angezeigt werden. Im ersten Feld 12.1 kann demnach ein Sendersuchlauf und das Abspeichern von Favoriten erfolgen. Dabei ist die Anzahl der Sender, welche als Favoritensender abgespeichert werden können nicht mehr begrenzt. Im zweiten Feld 12.2 kann eine Bandauswahl über die Schaltelement 13 erfolgen. Im dritten Feld kann eine Verkehrsinformation über die Schaltelement 14 an- bzw. ausgeschaltet werden. Am unteren Rand ist wiederum eine Leiste 10 angeordnet. Dabei kann mit dem Betätigen des Schaltelements 9.3 der Nutzer zu einer Home-Anzeige zurückkehren. Das Betätigen des Schaltelements 9.4 jedoch bewirkt die Möglichkeit einer Spracheingabe.

Über das Schaltelement 12.4 kann der Nutzer in eine Liste von Radiosendern wechseln, welche in Figur 5c gezeigt ist. Dabei sind verschiedene Radiosender dann untereinander aufgelistet, wobei der Nutzer mit einer Wischgeste durch die verschiedenen Radiosender scrollen kann. Beispielsweise werden immer vier Radiosender 8.1 bis 8.4 untereinander aufgelistet. Handelt es sich bei dem Sender um einen Favoritensender, so ist dies am linken Rand durch ein graphisches Objekt 9.1, welches als Stern ausgebildet ist, gekennzeichnet. Handelt es sich nicht um einen Favoritensender, so wird am linken Rand neben dem Schriftzug, der den Namen des Senders kennzeichnet, ein anderes graphisches Objekt 9.2, welches als Antenne ausgebildet ist, angezeigt.

Hinter dem Schaltelement 12.5 verbirgt sich eine Funktion, die der Nutzer über das Basisbedienteil nicht bedienen konnte. Diese ist eine Funktion zur Einstellung von Fader und Balance. Damit ist der Bass und die Höhen für die Lautsprecher verstellbar. Dazu umfasst die Lautsprecheranlage mehrere Arten von Lautsprechern, insbesondere gesonderte Lautsprecher für eine Wiedergabe von tiefen Tönen (Basslautsprecher) und Lautsprecher für die Wiedergabe von hohen Tönen (Höhenlautsprecher).

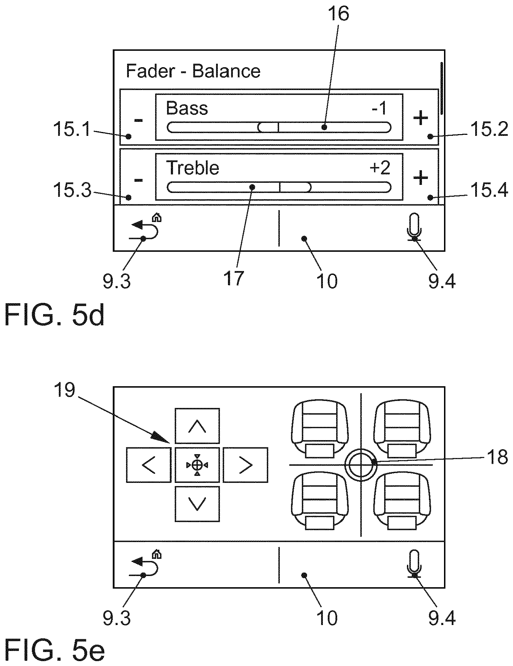

Durch Berühren des Schaltelements 12.5 öffnet sich eine in der Figur 5d gezeigten Anzeige. Durch berühren der Schaltelemente 15.1 bis 15.4 können der Bass oder die Höhen verstellen. Dabei ist der Bass mit den Schaltelementen 15.1 und 15.2 verstellbar. Zwischen den Schaltelementen wird dann eine Abweichung von der Nullstellung durch eine Balkendarstellung 16 angezeigt. Mit den Schaltelementen 15.3 und 15.4 können die Höhen verstellt werden. Auch hier wird in der Balkendarstellung 17 eine Abweichung von der Nullstellung angezeigt. Weiterhin ist dieselbe Leiste 10 wie bereits mit Bezug zu Figur 5b beschrieben am unteren Rand angezeigt.

Alternativ kann die Abweichung von den Nullstellungen durch eine direkte Berührung der Balken in den Balkendarstellungen 16 und 17 herbeigeführt werden.

Diese Lautsprecher können also nur dann tatsächlich angesteuert werden und somit die Qualität der wiedergegebenen Musik beeinflussen, wenn die mobile Bedieneinrichtung 3 mit dem Fahrzeug gekoppelt ist. Denn nur diese bietet die Möglichkeit, eine Veränderung der Einstellungen überhaupt vorzunehmen. Wird die mobile Bedieneinrichtung 3 wieder vom Fahrzeug getrennt, so nimmt die Bass- und Höheneinstellung wieder eine Grundeinstellung an.

In Figur 5e ist eine Anzeige gezeigt, die sich öffnet, wenn der Nutzer den "Klangort" einstellen möchte. Dazu öffnet sich eine Anzeige mit einer 2D-Grafik des Innenraums. Dabei sind durch vier angezeigte Fahrzeugsitze die verschiedenen Positionen, welche von Fahrer, Beifahrer und restlichen Fahrzeuginsassen eingenommen werden können angezeigt. In der Mitte ist ein verschiebbares graphisches Objekt 18 angezeigt. Links neben der Fahrzeuginnenraumgrafik mit dem verschiebbaren Objekt 18 ist eine Steuerkreuz 19 angezeigt, über welches das verschiebbare Objekt 18 auf den gewünschten Klangort verschoben werden kann. Weiterhin ist dieselbe Leiste 10 wie bereits mit Bezug zu Figur 5b beschrieben am unteren Rand angezeigt.

Hat der Nutzer den gewünschten Klangort eingestellt, wird die Lautstärke der Lautsprecher derart angesteuert, dass sich an der Stelle im Innenraum des Fahrzeugs, die der Nutzer ausgewählt hat, am lautesten beschallt wird. Auch diese Ansteuerung ist nur möglich, wenn die mobile Bedieneinrichtung 3 mit dem Fahrzeug gekoppelt ist.

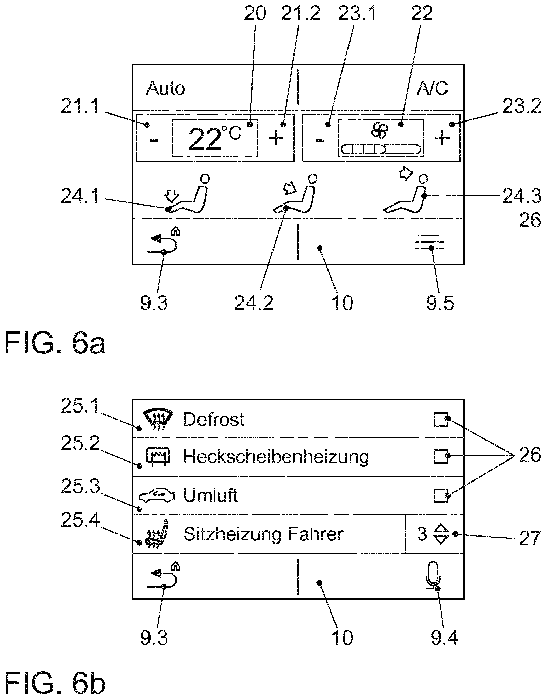

Wählt der Nutzer die Klimafunktion aus, so öffnet sich auf der Anzeigefläche der mobilen Bedieneinrichtung 3 eine in Figur 6a gezeigte Ansicht. Diese entspricht im Allgemeinen der Ansicht, welche auch auf der Anzeigefläche der fest im Fahrzeug angeordneten Bedieneinrichtung 2 angezeigt ist. Auf der linken Seite der Anzeige ist eine Temperaturanzeige 20 sowie zwei Schaltelementen 21.1 und 21.2 zum Einstellen der gewünschten Temperatur angeordnet. Dabei kann mit dem Schaltelement 21.1 die einzustellenden Temperatur erniedrigt und mit dem Schaltelement 21.2 die einzustellende Temperatur erhöht werden.

Auf der rechten Seite der Anzeige ist eine Belüftungsstärkenanzeige 22 angezeigt. Dabei kann mit dem Schaltelement 23.1 die Belüftungsstärke verringert und mit dem Schaltelement 23.2 die Belüftungsstärke erhöht werden. Die Stärke der Belüftung wird dabei allgemein durch eine Balkenanzeige angezeigt. Alternativ kann die Belüftungsstärke auch durch ein Berühren der Balkenanzeige selbst verändert werden.

Unterhalb der Temperatur- 20 und der Belüftungsstärkenanzeige 22 sind graphische Elemente 24.1 bis 24.3 zum Einstellen der zu klimatisierenden Zone angezeigt. Auch diese graphischen Elemente 24.1 bis 24.3 sind als Schaltelemente ausgebildet, so dass durch einfaches Berühren dieser die gewünschte Zone klimatisiert wird.

Wie bereits bei der Radiofunktion verfügt auch die Klimafunktion über die Leiste 10, welche unterhalb der Mehrzonenregelung angezeigt wird. Über das graphische Element 9.3 kann zum vorherigen Menü zurück navigiert werden. Über das graphische Element 9.5 lässt sich ein Menü öffnen, mittels welchem weitere Funktionen der Klimafunktion bedient werden können.

Dieses Menü ist in Figur 6b gezeigt. Das Menü weist neben der Möglichkeit der Bedienung der Abtaufunktion 25.1, der Heckscheibenheizung 25.2 und der Umluftfunktion 25.3 nun auch eine Möglichkeit zur Bedienung einer Sitzheizungsfunktion 25.4 auf.

Berührt der Nutzer die Schaltfläche 27, so kann der Nutzer die Stärke der Sitzheizung auswählen. Zwar ist die Sitzheizung ständig im Fahrzeug angeordnet, ein Ansteuern der Sitzheizung ohne das Koppeln der mobilen Bedieneinrichtung 3 mit dem Fahrzeug ist jedoch nicht möglich.

Bei der Auswahl der Funktionen, welche sich lediglich über die mobile Bedieneinrichtung bedienen lassen sollen, ist zu beachten, dass lediglich die Funktionen ausgesucht werden, bei denen es keine Auswirkungen auf die Verkehrssicherheit hat, wenn sie nicht zu bedienen sind. Vorteilhafterweise kann auf diese Art und Weise die Bedienung der Fahrzeugfunktion einfach und übersichtlich gehalten werden, ohne dass Komfortfunktionen fehlen.

Für die Radiofunktion können die Vorrichtungen 31, die zur Ausführung der Bassfunktion notwendig sind, im Allgemeinen auch der Basisradiofunktion zur Verfügung stehen. Sie können jedoch nur so angesteuert werden, dass sie die Bassfunktion ausführen, wenn die mobile Bedieneinrichtung mit dem Fahrzeug gekoppelt ist.

Im Unterschied dazu, stehen der Basisklimafunktion die Sitzheizungen 32 nicht zur Verfügung. Sie können tatsächlich nur dann verwendet werden, wenn die mobile Bedieneinrichtung 3 mit dem Fahrzeug gekoppelt ist.

Zusätzlich kann eine dritte Funktion, welche sich nur über die mobile Bedieneinrichtung 3 ein Fahrerassistenzsystem sein. Dieses kann entweder zusätzlich zu den Unterfunktionen der Radio- und Klimafunktionen bedienbar gemacht werden, oder aber auch die einzige Funktion sein, welche durch das Ankoppeln der mobilen Bedieneinrichtung 3 bedienbar gemacht wird.

### BEZUGSZEICHENLISTE

- 1: Bediensystem
- 2: Basisbedienteil
- 2.1, 2.2: zwei Bereiche des Basisbedienteils
- 3: mobile Bedieneinrichtung
- 4: Schwenkarm
- 5: Anzeigefläche
- 6.1, 6.2: Drehknopf
- 6.3-6.8: Drückschalter
- 7.1, 7.2: Drückschalter
- 8.1-8.4: Radiosender
- 9.1. 9.2: graphisches Element
- 10: Leiste
- 12.1-12.5: Menüpunkte, Schaltelemente
- 13, 14: Schaltelemente
- 15.1-15.4: Schaltelemente
- 16, 17: Balkendarstellung
- 18: verschiebbares graphisches Objekt
- 19: Steuerkreuz
- 20: Temperaturanzeige
- 21.1, 21.2: Schaltelemente
- 22: Belüftungsstärkeanzeige
- 23.1,23.2: Schaltelemente
- 24.1-24.3: Schaltelemente
- 25.1-25.4: Menüpunkte, Schaltelemente
- 26: Schaltelement
- 27: Schaltelement
- 28: Steuervorrichtung
- 29, 30: Vorrichtungen zum Ausführen der ersten Funktion
- 31, 32: Vorrichtungen zum Ausführen der zweiten Funktion
- 33: Schnittstelle

## Patentansprüche

1. Bediensystem (1) für ein Fahrzeug, mit
- einer fest im Fahrzeug angeordneten Bedieneinrichtung (2), mit der zumindest eine erste Funktion des Fahrzeugs bedienbar ist,
- einer zu einer Ausführung der ersten Funktion notwendigen Vorrichtung (29, 30),
- einer Schnittstelle (33), über welche eine mobile Bedieneinrichtung (3) mit dem Fahrzeug koppelbar ist, wobei mit der mobilen Bedieneinrichtung (3) zumindest eine zweite Funktion des Fahrzeugs bedienbar ist, welche nicht mit der fest im Fahrzeug angeordnete Bedieneinrichtung (2) bedienbar ist,
- einer zu einer Ausführung der zweiten Funktion notwendigen Vorrichtung (31, 32) und
- einer Steuervorrichtung (28), welche die erste Funktion des Fahrzeugs in Abhängigkeit von Nutzereingaben an der fest im Fahrzeug angeordneten Bedieneinrichtung (2) steuert und welche die zweite Funktion dann bedienbar macht, wenn die mobile Bedieneinrichtung (3) über die Schnittstelle (33) mit dem Fahrzeug gekoppelt ist, wobei die zweite Funktion in Abhängigkeit von Nutzereingaben an der mobilen Bedieneinrichtung (3) steuerbar ist,
- wobei die zu der Ausführung der zweiten Funktion notwendige Vorrichtung (31, 32) nur dann derart ansteuerbar ist, dass sie die zweite Funktion ausführt, wenn die mobile Bedieneinrichtung (3) mit dem Fahrzeug gekoppelt ist,
**dadurch gekennzeichnet, dass**
- die zweite Funktion eine Unterfunktion der ersten Funktion ist und
- die erste Funktion eine Klimafunktion ist, wobei die zur Ausführung der Klimafunktion notwendige Vorrichtung (30) ein Gebläse, welches die Lüftungsstärke steuert, Heizungen für die Luft im Innenraum des Fahrzeugs oder für die dem Innenraum des Fahrzeugs zugeführte Luft und/oder Scheibenheizungen umfasst, und die zweite Funktion eine Sitzheizungsfunktion ist, wobei die zur Ausführung der Sitzheizungsfunktion notwendige Vorrichtung (32) eine in den Sitzen integrierte Sitzheizung ist.

2. Bediensystem (1) nach Anspruch 1,
**dadurch gekennzeichnet, dass**
die fest im Fahrzeug angeordnete Bedieneinrichtung (2) und/oder die mobile Bedieneinrichtung (3) eine Anzeigefläche umfassen, wobei zumindest die Anzeigefläche der mobilen Bedieneinrichtung (3) berührungsempfindlich ist.

3. Bediensystem (1) nach Anspruch 1 oder 2,
**dadurch gekennzeichnet, dass**
durch das Koppeln der mobilen Bedieneinrichtung (3) über die Schnittstelle (33) mit dem Fahrzeug auf der Anzeigefläche der mobilen Bedieneinrichtung (3) zumindest ein erstes graphisches Element (12.5, 15, 18, 19, 25.4) anzeigbar ist, mittels welchem die zur Ausführung der zweiten Funktion notwendige Vorrichtung (31, 32) ansteuerbar ist, und zumindest ein zweites graphisches Element (12.1-12.4, 13, 14, 21, 25.1-25.3) anzeigbar ist, mittels welchem die zur Ausführung der ersten Funktion notwendige Vorrichtung ansteuerbar ist.

4. Bediensystem (1) nach Anspruch 1,
**dadurch gekennzeichnet, dass**
die zur Ausführung der ersten Funktion notwendige Vorrichtung die zur Ausführung der zweiten Funktion notwendige Vorrichtung umfasst.

5. Bediensystem (1) nach einem der vorhergehenden Ansprüche,
**dadurch gekennzeichnet, dass**
eine weitere Funktion, welche nur durch die mobile Bedieneinrichtung (3) bedienbar ist, ein Fahrerassistenzsystem ist.

6. Bediensystem (1) nach einem der vorhergehenden Ansprüche,
**dadurch gekennzeichnet, dass**
die Schnittstelle (33) eine drahtgebundene Schnittstelle ist, welche auf einem schwenkbaren Arm (4) im Innenraum des Fahrzeugs angeordnet ist.

7. Bedienverfahren in einem Fahrzeug, bei dem
- zumindest eine erste Funktion des Fahrzeugs mittels einer fest im Fahrzeug angeordneten Bedieneinheit (2) bedient wird, wobei eine zu einer Ausführung der ersten Funktion notwendige Vorrichtung (29, 30) im Fahrzeug angeordnet ist und
- über eine Schnittstelle (33) eine mobile Bedieneinrichtung (3) mit dem Fahrzeug gekoppelt wird, wobei mit der mobilen Bedieneinrichtung (3) zumindest eine zweite Funktion des Fahrzeugs bedient wird, welche nicht mit der fest im Fahrzeug angeordneten Bedieneinrichtung (2) bedient wird, wobei eine zu einer Ausführung der zweiten Funktion notwendige Vorrichtung (31, 32) im Fahrzeug angeordnet ist,
- wobei die erste Funktion des Fahrzeugs in Abhängigkeit von Nutzereingaben an der fest im Fahrzeug angeordneten Bedieneinrichtung (2) gesteuert wird und die zweite Funktion dann bedienbar gemacht wird, wenn die mobile Bedieneinrichtung (3) über die Schnittstelle (33) mit dem Fahrzeug gekoppelt wird, wobei die zweite Funktion in Abhängigkeit von Nutzereingaben an der mobilen Bedieneinrichtung (3) gesteuert wird und die zur Ausführung der ersten Funktion notwendige Vorrichtung (31, 32) nur dann so angesteuert wird, dass die zweite Funktion ausgeführt wird, wenn die mobile Bedieneinrichtung (3) mit dem Fahrzeug gekoppelt ist
**dadurch gekennzeichnet, dass**
- die zweite Funktion eine Unterfunktion der ersten Funktion ist und
- die erste Funktion eine Klimafunktion ist, wobei die zur Ausführung der Klimafunktion notwendige Vorrichtung (30) ein Gebläse, welches die Lüftungsstärke steuert, Heizungen für die Luft im Innenraum des Fahrzeugs oder für die dem Innenraum des Fahrzeugs zugeführte Luft, und/oder Scheibenheizungen umfasst, und die zweite Funktion eine Sitzheizungsfunktion ist, wobei die zur Ausführung der Sitzheizungsfunktion notwendige Vorrichtung (32) eine in den Sitzen integrierte Sitzheizung ist.

## Claims

1. Operator control system (1) for a vehicle, having
- an operator control unit (2) which is arranged in a fixed manner in the vehicle, by means of which at least one first function of the vehicle can be operated,
- a device (29, 30) necessary for executing the first function,
- an interface (33) via which a mobile operator control unit (3) can be coupled to the vehicle, wherein at least one second function of the vehicle can be operated with the mobile operator control unit (3) that cannot be operated by the operator control unit (2) which is arranged in a fixed manner in the vehicle,
- a device (31, 32) necessary for executing the second function, and
- a control device (28) which controls the first function of the vehicle depending on user inputs to the operator control unit (2) arranged in a fixed manner in the vehicle, and which enables operation of the second function if the mobile operator control unit (3) is coupled to the vehicle via the interface (33), wherein the second function can be controlled depending on user inputs to the mobile operator control unit (3),
- wherein the device (31, 32) necessary for executing the second function can only be activated in such a way that it executes the second function if the mobile operator control unit (3) is coupled to the vehicle,
**characterized in that**
- the second function is a subfunction of the first function, and
- the first function is an climate control function, wherein the device (30) necessary for executing the climate control function comprises a blower which controls the degree of ventilation, heaters for the air in the interior of the vehicle or for the air supplied to the interior of the vehicle, and/or window defoggers, and the second function is a seat heating function, wherein the device (32) necessary for executing the seat heating function is a seat heater integrated into the seats.

2. Operator control system (1) according to Claim 1,
**characterized in that**
the operator control unit (2) arranged in a fixed manner in the vehicle and/or the mobile operator control unit (3) comprise a display area, wherein at least the display area of the mobile operator control unit (3) is touch-sensitive.

3. Operator control system (1) according to Claim 1 or 2,
**characterized in that**
by coupling the mobile operator control unit (3) to the vehicle via the interface (33), at least one first graphical element (12.5, 15, 18, 19, 25.4) by means of which the device (31, 32) necessary for executing the second function can be activated can be displayed on the display area of the mobile operator control unit (3), and at least one second graphical element (12.1-12.4, 13, 14, 21, 25.1-25.3) can be displayed by means of which the device necessary for executing the first function can be activated.

4. Operator control system (1) according to Claim 1,
**characterized in that**
the device necessary for executing the first function comprises the device necessary for executing the second function.

5. Operator control system (1) according to any of the preceding claims,
**characterized in that**
an driver assistance system is an additional function which can only be operated via the mobile operator control unit (3).

6. Operator control system (1) according to any of the preceding claims,
**characterized in that**
the interface (33) is a wired interface arranged on a swiveling arm (4) in the interior of the vehicle.

7. Operator control method in a vehicle, in which
- at least one first function of the vehicle is operated by means of an operator control unit (2) which is arranged in a fixed manner in the vehicle, wherein a device (29, 30) necessary for executing the first function is arranged in the vehicle, and
- a mobile operator control unit (3) is coupled to the vehicle via an interface (33), wherein at least one second function of the vehicle is operated by the mobile operator control unit (3) which is not operated by the operator control unit (2) which is arranged in a fixed manner in the vehicle, wherein a device (31, 32) necessary for executing the second function is arranged in the vehicle,
- wherein the first function of the vehicle is controlled depending on user inputs to the operator control unit (2) arranged in a fixed manner in the vehicle, and operation of the second function is enabled if the mobile operator control unit (3) is coupled to the vehicle via the interface (33), wherein the second function is controlled depending on user inputs to the mobile operator control unit (3), and the device (31, 32) necessary for executing the first function is only activated in such a way that the second function is executed if the mobile operator control unit (3) is coupled to the vehicle
**characterized in that**
- the second function is a subfunction of the first function, and
- the first function is a climate control function, wherein the device (30) necessary for executing the climate control function comprises a blower which controls the degree of ventilation, heaters for the air in the interior of the vehicle or for the air supplied to the interior of the vehicle, and/or windshield defoggers, and the second function is a seat heating function, wherein the device (32) necessary for executing the seat heating function is a seat heater integrated into the seats.

## Revendications

1. Système d'utilisation (1) pour un véhicule, comprenant
- un dispositif d'utilisation (2) disposé de manière fixe dans le véhicule, au moyen duquel au moins une première fonction du véhicule peut être utilisée,
- un dispositif (29, 30) nécessaire pour l'exécution de la première fonction,
- une interface (33), via laquelle un dispositif d'utilisation mobile (3) peut être couplé au véhicule, le dispositif d'utilisation mobile (3) permettant d'utiliser au moins une deuxième fonction du véhicule, laquelle ne peut pas être utilisée au moyen du dispositif d'utilisation (2) disposé de manière fixe dans le véhicule,
- un dispositif (31, 32) nécessaire pour l'exécution de la deuxième fonction et
- un dispositif de commande (28), lequel commande la première fonction du véhicule en fonction des entrées d'utilisateur dans le dispositif d'utilisation (2) disposé de manière fixe dans le véhicule et lequel rend la deuxième fonction utilisable lorsque le dispositif d'utilisation mobile (3) est couplé au véhicule via l'interface (33), la deuxième fonction pouvant être commandée en fonction des entrées d'utilisateur dans le dispositif d'utilisation mobile (3),
- le dispositif (31, 32) nécessaire pour l'exécution de la deuxième fonction ne pouvant être commandé de façon à exécuter la deuxième fonction que lorsque le dispositif d'utilisation mobile (3) est couplé au véhicule,
**caractérisé en ce que**
- la deuxième fonction est une sous-fonction de la première fonction et
- la première fonction est une fonction de climatisation, le dispositif (30) nécessaire pour l'exécution de la fonction de climatisation comprenant un ventilateur, lequel commande la puissance de ventilation, des chauffages pour l'air à l'intérieur du véhicule ou pour l'air introduit dans l'intérieur du véhicule et/ou des chauffages pour vitres, et la deuxième fonction est une fonction de chauffage de sièges, le dispositif (32) nécessaire pour l'exécution de la fonction de chauffage de sièges étant un chauffage de siège intégré dans les sièges.

2. Système d'utilisation (1) selon la revendication 1,
**caractérisé en ce que**
le dispositif d'utilisation (2) disposé de manière fixe dans le véhicule et/ou le dispositif d'utilisation mobile (3) comprennent une surface d'affichage, au moins la surface d'affichage du dispositif d'utilisation mobile (3) étant tactile.

3. Système d'utilisation (1) selon la revendication 1 ou 2,
**caractérisé en ce que**
le couplage du dispositif d'utilisation mobile (3) au véhicule via l'interface (33) permet l'affichage sur la surface d'affichage du dispositif d'utilisation mobile (3) d'au moins un premier élément graphique (12.5, 15, 18, 19, 25.4), au moyen duquel le dispositif (31, 32) nécessaire pour l'exécution de la deuxième fonction peut être commandé, et permet l'affichage d'au moins un deuxième élément graphique (12.1-12.4, 13, 14, 21, 25.1-25.3), au moyen duquel le dispositif nécessaire pour l'exécution de la première fonction peut être commandé.

4. Système d'utilisation (1) selon la revendication 1,
**caractérisé en ce que**
le dispositif nécessaire pour exécuter la première fonction comprend le dispositif nécessaire pour exécuter la deuxième fonction.

5. Système d'utilisation (1) selon l'une quelconque des revendications précédentes,
**caractérisé en ce que**
une autre fonction, qui ne peut être utilisée que via le dispositif d'utilisation mobile (3), est un système d'assistance au conducteur.

6. Système d'utilisation (1) selon l'une quelconque des revendications précédentes,
**caractérisé en ce que**
l'interface (33) est une interface câblée, laquelle est disposée sur un bras pivotant (4) à l'intérieur du véhicule.

7. Procédé d'utilisation dans un véhicule, dans lequel
- au moins une première fonction du véhicule est utilisée au moyen d'un dispositif d'utilisation (2) disposé de manière fixe dans le véhicule, un dispositif (29, 30) nécessaire pour l'exécution de la première fonction étant disposé dans le véhicule et
- un dispositif d'utilisation mobile (3) est couplé au véhicule via une interface (33), au moins une deuxième fonction du véhicule étant utilisée au moyen du dispositif d'utilisation mobile (3), laquelle ne peut pas être utilisée au moyen du dispositif d'utilisation (2) disposé de manière fixe dans le véhicule, un dispositif (31, 32) nécessaire pour l'exécution de la deuxième fonction étant disposé dans le véhicule,
- la première fonction du véhicule étant commandée en fonction d'entrées d'utilisateur dans le dispositif d'utilisation (2) disposé de manière fixe dans le véhicule et la deuxième fonction étant rendue utilisable lorsque le dispositif d'utilisation mobile (3) est couplé au véhicule via l'interface (33), la deuxième fonction étant commandée en fonction d'entrées d'utilisateur dans le dispositif d'utilisation mobile (3) et le dispositif (31, 32) nécessaire pour l'exécution de la première fonction n'étant commandé de façon à exécuter la deuxième fonction que lorsque le dispositif d'utilisation mobile (3) est couplé au véhicule,
**caractérisé en ce que**
- la deuxième fonction est une sous-fonction de la première fonction et
- la première fonction est une fonction de climatisation, le dispositif (30) nécessaire pour l'exécution de la fonction de climatisation comprenant un ventilateur, lequel commande la puissance de ventilation, des chauffages pour l'air à l'intérieur du véhicule ou pour l'air introduit dans l'intérieur du véhicule et/ou des chauffages pour vitres, et la deuxième fonction est une fonction de chauffage de sièges, le dispositif (32) nécessaire pour l'exécution de la fonction de chauffage de sièges étant un chauffage de siège intégré dans les sièges.
